# EUROPÄISCHE PATENTSCHRIFT

(11) **EP 3 615 836 B1**
(45) Veröffentlichungstag und Bekanntmachung des Hinweises auf die Patenterteilung: **24.03.2021**
(21) Anmeldenummer: 18720993.7
(22) Anmeldetag: 19.04.2018
(51) Int. Cl.: F16D 66/02, F16D 65/12, F16D 65/092

(54) **KOMBINIERTE ERFASSUNG EINES VERSCHLEISSES VON KOMPONENTEN EINER BREMSANLAGE, INSBESONDERE EINES KRAFTFAHRZEUGS**
COMBINED DETECTION OF WEAR OF COMPONENTS OF A BRAKE SYSTEM, IN PARTICULAR OF A MOTOR VEHICLE
DÉTECTION COMBINÉE DE L'USURE D'ÉLÉMENTS D'UN SYSTÈME DE FREINAGE, EN PARTICULIER D'UN VÉHICULE À MOTEUR

(30) Priorität: 27.04.2017 DE 102017207059; 19.10.2017 DE 102017218675
(43) Veröffentlichungstag der Anmeldung: 04.03.2020
(73) Patentinhaber: Robert Bosch GmbH, 70442 Stuttgart (DE)
(72) Erfinder: BURG, Andreas, 71640 Ludwigsburg (DE); ROHLFING, Franziska, 71229 Leonberg (DE); BOWE, Juergen, 76131 Karlsruhe (DE); GEISLER, Martin Christoph, 70190 Stuttgart (DE)
(86) Internationale Anmeldenummer: PCT/EP2018/059976
(87) Internationale Veröffentlichungsnummer: WO 2018/197318

(56) Entgegenhaltungen:
- EP-A1- 2 924 313
- EP-A2- 2 921 322
- DE-A1- 19 933 961
- DE-A1-102011 000 425

## Beschreibung

Die vorliegende Erfindung betrifft eine kombinierte Erfassung eines Verschleißes von Komponenten einer Bremsanlage, insbesondere eines Kraftfahrzeugs

Bremsscheiben und Bremsklötze sind Verschleißteile, die aktiv den Bremsvorgang in einem Fahrzeug umsetzen. Dabei wird die Bewegungsenergie des Fahrzeugs in Wärme umgewandelt. Der Zustand der Beläge und Scheiben ist dabei bedeutend, da nur ein ausreichend dicker Bremsbelag auf einer ausreichend dicken Bremsscheibe das sichere Halten des Fahrzeuges ermöglicht. Es ist daher wichtig, den Verschleiß von Bremsbelag und Bremsscheibe zu messen.

Ein Verschleißanzeiger für Bremsen wird verwendet, um dem Nutzer oder Besitzer eines Fahrzeuges anzuzeigen, dass die Verschleißteile der Bremse gewechselt werden müssen. Bremsenverschleißanzeiger werden überwiegend in der Automobilindustrie eingesetzt, sind aber auch sinnvoll für andere Anwendungen bei denen Bremsbeläge eine Rolle spielen wie zum Beispiel bei Windkraftanlagen, Kränen, Aufzügen und anderen beweglichen Maschinen.

Es gibt im Stand der Technik verschiedene Typen von Verschleißanzeigern bei Bremsbelägen, jedoch nur wenige zur Ermittlung des Verschleißes einer Bremsscheibe; diese beruhen darauf, dass durch Markierungen auf der Bremsscheibe der Verschleißgrad durch Betrachten der Bremsscheibe abgeschätzt werden kann.

Es sind. Zumindest für PKW, keine Sensoren bekannt, die den Verschleiß der Bremsscheibe im Betrieb elektronisch messen. Ebenso sind keine einzelne Sensoren bekannt, die den Verschleiß der Bremsscheibe und des Bremsbelages im Betrieb gleichzeitig messen. Weiterhin sind keine Sensoren bekannt, die den Verschleiß des Bremsbelages oder/und der Scheibe im Betrieb kontinuierlich messen.

Die EP2921322A2 zeigt die Erfassung des Verschleißes der Bremsscheibe eines Kraftfahrzeugs. In die Bremsscheibe ist dabei eine tiefenabhängige Struktur eingearbeitet, die je nach Verscheiß der Bremsscheibe unterschiedliche Strukturen, QR-Codes, an der Oberfläche der Bremsscheibe freigibt. Durch Auslesen der Strukturen,

QR-Codes, geschieht dann vorzugsweise opto-elektronisch. In jedem Fall muss der die Struktur/QR-Code erfassende Sensor, ein externes Endverbrauchermobilgerät, zu der Oberfläche der Bremsscheibe beabstandet sein.

Die DE19933961A1 zeigt das Datenmanagement bei der Ermittlung von Bremsverschleißdaten ganzen Fahrzeugflotten ohne auf die konkrete Erfassung der Verschleißdaten einzugehen.

### Offenbarung der Erfindung

Die Erfindung geht aus von einer Sensoranordnung zur Erfassung eines Verschleißes von Komponenten einer Bremsanlage. Hierbei ist insbesondere an eine Bremsanlage für ein Kraftfahrzeugs gedacht. Dabei weist die Bremsanlage wenigstens eine Bremsscheibe und einen Bremsbelag auf. Die Sensoranordnung erfasst ein Muster der Bremsscheibe erfasst. Die erfindungsgemäße Sensoranordnung ist derart ausgestaltet, dass sie das Muster der Bremsscheibe dann erfasst, wenn wenigstens ein Teil der Sensoranordnung an wenigstens einem Teil der Bremsscheibe anliegt. Hierzu wird das Anliegen wenigstens eines Teils der Sensoranordnung an wenigstens einem Teil der Bremsscheibe erfasst.

Die Erfindung hat den Vorteil, dass erfindungsgemäß der Verschleißzustand der Bremsscheibe durch die erfindungsgemäße Sensoranordnung erfasst wird und angezeigt werden kann; eine Betrachtung der Bremsscheibe ist nicht mehr erforderlich. Hierdurch wird die Sicherheit deutlich erhöht. Die erfindungsgemäße Sensoranordnung kann auch für bereits gebrauchte Bremsen bzw. Kraftfahrzeuge nachrüstbar sein.

In einer vorteilhaften Ausgestaltung der Erfindung ist vorgesehen, dass die Sensoranordnung derart ausgestaltet ist, dass sie ein sich mit der Dicke der Bremsscheibe veränderndes Muster der Bremsscheibe erfasst. Hierdurch ist es möglich, den Verschleißgrad der Bremsscheibe in verschiedenen Stufen zu messen. Hierbei kann vorgesehen sein, dass sich das Muster kontinuierlich oder diskret in Stufen mit der Dicke ändert. Damit ist eine kontinuierliche oder stufenförmige Messung des Verschleißgrads der Bremsscheibe möglich.

Die erfindungsgemäße Sensoranordnung kann derart ausgestaltet sein, dass sie das Muster der Bremsscheibe dann erfasst, wenn wenigstens ein Teil der Sensoranordnung an wenigstens einem Teil der Bremsscheibe anliegt. Hierzu wird das Anliegen wenigstens eines Teils der Sensoranordnung an wenigstens einem Teil der Bremsscheibe erfasst.

Bei einer vorteilhaften Ausgestaltungen der Erfindung ist vorgesehen, dass als Muster in wenigstens einem Teil der Bremsscheibe verteilte Rillen und/oder Löcher und/oder Ovale unterschiedlicher Tiefe erfasst werden. Hierbei können die Rillen wie folgt ausgestaltet sein:
Rillen mit tiefenabhängiger Breite und/oder
radial in der Bremsscheibe verlaufende Rillen und/oder
radial in der Bremsscheibe verlaufende Rillen mit unterschiedlichen Abständen zueinander.

Alternativ oder ergänzend zu den Rillen in der Bremsscheibe kann bei einer weiteren vorteilhaften Ausgestaltungen der Erfindung vorgesehen sein, dass als Muster in wenigstens einem Teil der Bremsscheibe verteiltes Material erfasst wird. Dabei ist das verteilte Material von dem der Bremsscheibe unterschiedlich. Besonders vorteilhaft ist es, wenn die Verteilung des Materials als tiefenabhängige Verteilung erfasst wird. Hierdurch wird eine qualitative Abnutzung der Bremsscheibe erfassbar.

Besonders vorteilhaft ist es, wenn wenigstens Teile der Sensoranordnung derart ausgestaltet sind, dass diese Teile wenigstens eine von der Sensoranordnung erfassbare Eigenschaften aufweisen und wenigstens eine der erfassbaren Eigenschaften sich mit der Abnutzung des Bremsbelags ändert. Damit ist eine kombinierte Erfassung des Verschleißes der Bremsscheibe und des Bremsbelags möglich.

Besonders vorteilhaft ist es die Sensoranordnung aus einem einzigen Sensorelement besteht. Damit ist eine kostengünstige kombinierte Erfassung der Verschleißes der Bremsscheibe und des Bremsbelags möglich. Je nach gemessenen Größen und verwendeten Messverfahren können aber auch mehrere Sensoren vorteilhaft sein.

Bei der kombinierten Erfassung der Verschleißes der Bremsscheibe und des Bremsbelags ist es vorteilhaft, dass das Sensorelement am und/oder im Bremsbelag und/oder am Bremssattel und/oder an der Bremsenaufhängung befestigt ist und wenigstens Teile des Sensorelements während des Bremsbetriebs mit dem Bremsbelag verschlissen werden. Damit werden die erfassbaren Eigenschaften geändert. Insbesondere ist bei dieser Ausführungsform vorgesehen, dass die Eigenschaft durch eine Messung des elektrischen Widerstands und/oder der elektrischen Kapazität erfasst werden.

Die Sensoranordnung kann derart ausgestaltet sein, dass die Teile des Sensorelements, die sich mit dem Bremsbelag verschleißen, auch die Eigenschaften der Bremsscheibe erfassen, die sich durch das Muster der Bremsscheibe verändern. Damit ist eine besonders kostengünstige kombinierte Erfassung der Verschleißes der Bremsscheibe und des Bremsbelags möglich.

In einer weiteren vorteilhaften Ausgestaltung ist vorgesehen, dass die Sensoranordnung eine drahtlose Übertragungseinheit aufweist, mittels der die erfassten Größen drahtlos übertragen werden. Hierbei kann vorgesehen sein, dass die Übertragungseinheit räumlich getrennt von dem Sensorelement angeordnet ist. Mittels dieser Ausgestaltung der Erfindung kann der aktuelle Verschleiß an ein mobiles Gerät oder an eine fahrzeugextern angeordnete Einheit, z.B. einen sogenannten Cloud-Rechner, übertragen werden und dort angezeigt werden und/oder abhängig von dem erfassten Verschleiß entsprechende Maßnahmen ergriffen werden wie ein Werkstattbesuch oder die Anpassung der Bremsstrategien an den Verschleißzustand oder, im Extremfall, die Stilllegung des Kraftfahrzeugs.

Die Erfindung betrifft auch einen Bremsbelag mit einer Sensoranordnung im vorhergehend beschriebenen Umfang.

Die Erfindung betrifft ferner ein Verfahren zur kombinierten Erfassung eines Verschleißes einer Bremsscheibe und eines Bremsbelags einer Bremsanlage mit einer Sensoranordnung im vorhergehend beschriebenen Umfang, wobei zusätzlich die Drehrichtung der Bremsscheibe erfasst wird.

Das erfindungsgemäße Verfahren kann derart ausgestaltet sein, dass zumindest die Erfassung des Verschleißes der Bremsscheibe nur während Bremsvorgängen getätigt wird.

Vorteilhafterweise wird die Erfassung des Verschleißes der Bremsscheibe nur während vorbestimmter Bremsvorgängen getätigt, wobei die Bremsvorgänge abhängig von der Geschwindigkeit des Kraftfahrzeugs und/oder abhängig vom Ausmaß des Bremsvorgangs vorbestimmt werden. Der Hintergrund für diese Ausgestaltung ist, dass sich eine Bremsscheibe während einer einzigen Bremsung nur sehr wenig verschleißt. Aus diesem Grund ist es nicht notwendig, alle Daten bei jeder Bremsung zuverlässig auszuwerten. Es ist ausreichend, wenn beispielweise pro festgelegter Zeiteinheit ein auswertbares Messergebnis vorliegt. Der Sensor kann also die Scheibe vermessen, wenn diese sich sehr langsam bewegt wie das zum Beispiel beim Bremsen vor einer Ampel kurz vor dem Stillstand der Fall ist.

Vorteilhafterweise geschieht die Erfassung des Verschleißes der Bremsscheibe derart, dass eine die Temperatur des Bremsbelags repräsentierende Temperaturgröße erfasst wird und die Temperaturgröße bei der Erfassung des Verschleißes berücksichtigt wird. Die erfasste Temperatur des Bremsbelages kann einem Bremssteuerungssystem wie beispielweise einer Fahrstabilitätssteuerung (ESP) oder anderen Systemen zur Verfügung gestellt werden, um die Fahrsicherheit weiter zu erhöhen, in dem der spezifische Reibwert bei der jeweiligen Temperatur berücksichtigt wird.

Weitere vorteilhafte Ausgestaltungen sind den Unteransprüchen zu entnehmen.

### Zeichnungen

Nachfolgend werden Ausführungsbeispiele der Erfindung anhand von Zeichnungen erläutert. Es zeigen
Figur 1 zeigt eine Bremsanordnung mit einer Verschleißmessung gemäß dem Stand der Technik
Figur 2 zeigt eine schematische Darstellung der Bremsanordnung mit einer Sensoranordnung gemäß einer Ausführungsform der Erfindung

Die Figuren 3a bis 3d und 5 bis 7 zeigen verschiedene Ausgestaltungen und Anordnungen der Rillen in der Bremsscheibe

Die Figur 8 zeigt ein Anzeigegerät und die Figur 9 eine Übertragungseinheit

### Beschreibung von Ausführungsbeispielen

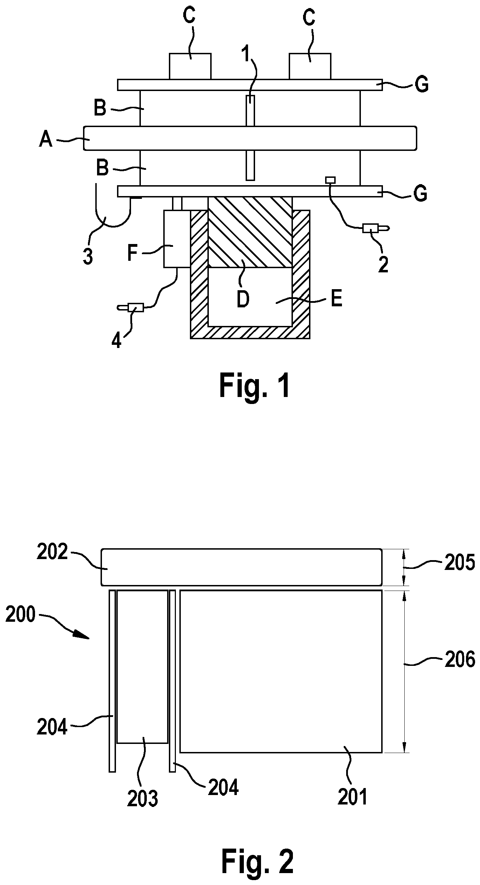

Die Figur 1 zeigt die Bremsbeläge B, die auf der Rückenplatte G befestigt sind. Die Bremsbeläge B werden im Bremsbetrieb vom Bremskolben D, welcher durch die Bremsflüssigkeit E bewegt wird, gegen die Bremsscheibe A gedrückt. Durch den Kontakt von Bremsbelag B und Bremsscheibe A wird mechanische Energie in Wärme umgewandelt, was zu einer negativen Beschleunigung des Fahrzeuges führt und Temperaturen bis 700 Grad und mehr erzeugen kann. Dadurch wird der Bremsbelag B auf Dauer verschlissen. Die Bremsscheibe A wird auch verschlissen aber in einem geringeren Umfang als der Bremsbalg B. Die Träger C sind mit dem Bremssattel verbunden und erzeugen eine Gegenkraft, die durch den Druck des Bremskolbens D erzeugt wird.

In dieser Darstellung wird der Verschleiß des Bremsbelages durch die sich ändernde Distanz zwischen Bremssattel und Belagrückenplatte G über einen Wegesensor F gemessen.

Eine Ausführungsform der Erfindung besteht darin, mit einem einzigen Sensor den Verschleiß des Bremsbelages und der Bremsscheibe zu messen. Idealerweise soll die erfindungsgemäße Sensoranordnung auch für bereits gebrauchte Bremsen bzw. Kraftfahrzeuge nachrüstbar sein. Es können aber auch mehrere Sensoren zum Einsatz kommen.

Wie eingangs bereits ausgeführt sind die zur Zeit verbauten Sensoren zur Verschleißmessung der Bremsbeläge undifferenziert oder digital und unterstützen keine kontinuierliche Messung und damit keine auf dem tatsächlichen Verschleiß basierende Vorhersage, wann der Bremsbelag zu erneuern ist, sondern sie liefern lediglich Berechnungsmodelle. Momentan ist es also nicht möglich festzustellen, wie weit die Bremsbeläge oder die Bremsscheibe tatsächlich abgefahren sind. Diese Information über den genauen Zustand von Belag und Scheibe sind aber zum Beispiel zur Realisierung selbst fahrender Fahrzeuge wünschenswert. Es bieten sich aber auch Vorteile für Fahrzeugflottenmanager oder interessierte Nutzer zur Wechselplanung und Vermeidung von Stillstandszeiten.

Für die Messung von Bremsbelag- und Bremsscheibenverschleiß wird in einer im Folgenden vorgestellten Ausführungsform nur ein einzelner Sensor benötigt. Dieser misst den tatsächlichen Zustand von Belag und Scheibe. Er ist hoch hitzebeständig und zuverlässig. Er kann auch nachgerüstet werden. Die Verwendung von mehreren Sensoren ist jedoch auch möglich.

Die Verschleißinformation wird an digitale Endgeräte (Mobiltelefone, Tablets, Computer, Cloud-Rechner usw.) und/oder an die Fahrzeugelektronik übertragen, was die Planung von Wechselterminen möglich macht und die Sicherheit verbessert. Die Auswertung der Daten über eine spezifisch Applikation-Software, z.B: eine Smartphone-APP, kann zum Planen der Wechselintervalle genutzt werden, um Stillstandszeiten zu minimieren aber auch verfrühtes Wechseln zu vermeiden. Der Nutzer kann aktiv via pop up, email oder SMS darauf hinweisen, dass bald ein Wechsel fällig wird, ohne dass die Beläge optisch geprüft werden müssten oder durch einen akustischen Warngeber unangenehm darauf hinweisen.

Für die Messung des Bremsscheibenverschleißes wird erfindungsgemäß eine codierte Bremsscheibe verwendet.

Weitere Informationen des Sensors wie z.B. Temperatur des Belages kann dem Elektronischen Stabilitätssystem (ESP) oder an-deren System zur Verfügung gestellt werden, um die Fahrsicherheit weiter zu erhöhen, in dem der spezifische Reibwert bei Temperatur berücksichtigt wird.

Die Figur 2 zeigt eine Sensoranordnung gemäß einem Ausführungsbeispiel der Erfindung. Um den Verschleiß von Bremsbelag 201 und Bremsscheibe 202 (Dicke 205) zu messen, soll nur ein einziges Sensorelement 203 verwendet werden. Dieses Sensorelement 203 wird am/im Bremsbelag 201 befestigt (Befestigung 204) oder integriert und misst die Dicke 206 des Bremsbelages 201 aktiv in dem das Sensorelement 203 zusammen mit dem Bremsbelag 201 während des Bremsbetriebes verschlissen wird und dabei seine Eigenschaften ändert. Dies könnte erreicht werden durch einen elektrischen Widerstand des Elements 203, der sich durch Abnutzung ändert. Alternativ oder ergänzend dazu könnte z.B. eine kapazitive Messung des Materials des Sensorelements 203 oder eine induktive Messung über eine im Element 203 integrierte Spule, die sich abnutzt, vorgesehen sein.

Es kann dabei sinnvoll sein, mehrere voneinander getrennte Messkreisläufe oder Sensoren zur Messung und Kalibrierung zu verwenden.

Die Signale des Sensorelements 203 werden durch einen Micro-Kontroller ausgewertet, der weitere Signal-verarbeitung und -ermittlung vornehmen kann wie z.B. Temperaturkompensation, um genauere Verschleißwerte zu erhalten. Wird ein Sensorverschleißmaterial gewählt, das seine elektrischen Eigenschaften nicht nur bei Abnutzung sondern auch unter Temperatur ändert, kann auch die Temperatur des Bremsbelags oder/und der Scheibe gemessen/errechnet und angegeben werden. Diese Temperaturinformation kann auch weiteren Systemen wie z.B. ESP (elektronische Stabilisierungsprogramm) oder ABS (Antiblockiervorrichtung) zur Verfügung gestellt werden, um die Fahrsicherheit weiter zu erhöhen in dem z.B. der spezifische Reibwert bei Temperatur berücksichtigt wird. Die Messung des Belagsverschleißes ist unabhängig von der verwendeten Bremsscheibe und Sensor abhängig auch bei Fahrzeugstillstand möglich.

Die Messung findet während eines Bremsvorganges statt. Betätigt der Fahrer die Bremse, so wird der Bremsbelag 201 mit dem Sensorelement 203 an die Scheibe 202 gedrückt, um das Fahrzeug zu verzögern. Dabei ändert der Kontakt zwischen Sensor 203 und Scheibe 202 die Eigenschaften des Sensors 203.

Da sich eine Bremsscheibe 202 während einer einzigen Bremsung nur sehr wenig verschleißt, ist es nicht notwendig alle Daten zuverlässig auszuwerten. Es ist ausreichend, wenn pro festgelegter Zeiteinheit ein auswertbares Messergebnis vorliegt. Der Sensor 203 kann also die Scheibe 202 vermessen, wenn diese sich sehr langsam bewegt wie das zum Beispiel beim Bremsen vor einer Ampel kurz vor dem Stillstand der Fall ist.

Um den Verschleiß der Scheibe 202 zu sensieren, wird diese mit einem Muster versehen, das der Sensor 203 während er Kontakt mit der Bremsscheibe 202 hat aufgreifen kann. Damit der Sensor 203 nicht nur den Kontakt mit der Scheibe 202 wahrnehmen kann in dem sich z.B. der Widerstand des Sensors 203 bei Kontakt mit der Scheibe von hoch auf niedrig verändert, muss die Bremsscheibe 202 so bearbeitet werden, dass sich der Kontakt immer wieder öffnet und schließt und so ein Signal von z.B. hochohmiger und niederohmiger Abfolge ergibt, das ein Micro Kontroller auswerden kann. Dieses Muster kann symmetrisch oder asymmetrisch sein.

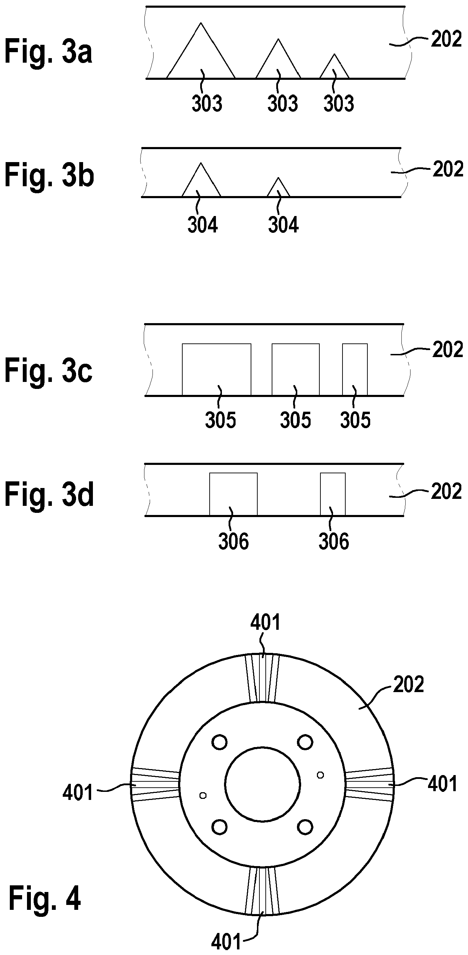

Zur stufenweisen Messung können z.B. über die Bremsscheibe 202 verteilt Rillen 303, 304, 305, 306 von verschiedener Tiefe die Bremsscheibe 202 gefräst werden. Dies ist in verschiedenen Ausführungsformen in den Figuren 3a bis 3d gezeigt.

Die Rillen 303, 304, 305, 306 verringern bei Kontakt des Sensorelements 203 mit einer Rille auf der Bremsscheibe 202 den elektrische Widerstand des Sensors. Kontaktiert das Sensorelement 203 dagegen einen Bereich der Bremsscheibe 202 ohne Rille, so erhöht sich der elektrische Widerstand wieder. Es kommt somit bei der hier beispielhafte ausgeführten Widerstandsmessung zu einem Muster im Messsignal, das von der Rillenverteilung und Rillenbreite abhängt.

Aus diesem Muster kann der Sensor 203 erkennen wie viele Rillen auf der Scheibe 202 vorhanden sind. Sollten die Rillen in der Bremsscheibe 202 durch Verschleiß abgeschliffen worden sein, so ändert sich das Muster und zeigt damit den Verschleiß an.

In den Figuren 3a und 3b ist gezeigt, dass die Rillen derart ausgelegt sind, dass sich nicht nur die Anzahl sondern auch die Breite der Rillen abhängig von der Dicke des Bremsbelags 202 ändert. Auf diese Weise kann kontinuierlich der Verschleiß der Scheibe 202 bestimmt werden. Wegen der Auswertegenauigkeit sollte das Muster 401 mehrfach auf der Scheibe 202 vorkommen, was in der Figur 4 beispielhaft gezeigt ist.

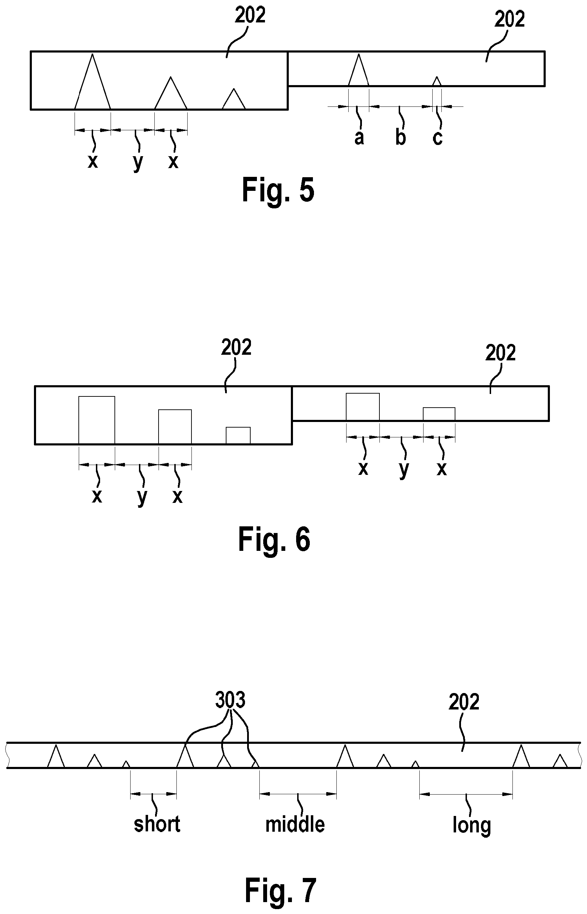

Wie in der Figur 5 und 6 beispielhaft gezeigt ist, können die Rillen auch so abgeschrägt werden, dass diese bei Abnutzung den Kontakt immer schneller oder langsamer schließen z.B. durch dreieckige Rillen (Figur 5) im Vergleich zu rechteckigen Rillen (Figur 6).

Um weitere Informationen wie z.B. die Drehrichtung oder Geschwindigkeit der Bremsscheibe 202 sensieren zu können, kann man die Muster 303 in unterschiedlichen Abstände setzen und damit richtungs-abhängig unterschiedliche Impulse durch das Sensorelement 203 auslösen. Dies ist in der Figur 7 gezeigt.

In der Figur 7 ist hierzu beispielhaft eine Gruppierung 303 von 3 Rillen gezeigt, die derart auf der Bremsscheibe 202 angeordnet sind, dass zwischen den Gruppierungen 303 unterschiedliche räumliche Abstände "short", "middle" und "long" vorhanden sind.

So wird in der in der Figur 7 gezeigten Anordnung der Rillen die Impulsfolge short, middle, long, short, middle, long
eine Drehrichtung (z.B. Vorwärtsrichtung des Kraftfahrzeugs) angeben.
Die Impulsfolge short, long, middle, short, long, middle
wird dann die andere Drehrichtung (z.B. Rückwärtsrichtung des Kraftfahrzeugs) angeben.

Die Impulsfolge
short, middle, long
gibt eine einzige Umdrehung der Bremsscheibe an. Hieraus kann man dann unter Kenntnis der Reifenumfangs die Fahrzeuggeschwindigkeit abschätzen.

Es muss sich bei dem Muster nicht unbedingt um Rillen handeln, es können auch andere geometrische Formen wie Löcher oder Ovale etc. verwendet werden, die sich dazu eignen, den Sensorzustand so zu ändern, dass dies ein Muster erzeugt, was vom Micro-Kontroller interpretiert werden kann.

Es könnten auch Gegenstände in die Bremsscheibe 202 eingebracht werden wie z.B. nichtleitende Materialien oder Magnete oder Marker/Muster/Löcher/Rillen, die erst ab einem gewissen Verschleiß bzw. Dicke der Bremsscheibe 202 sichtbar werden.

Sollte eine Bremsscheibe ohne Markierung verwendet werden oder alle Markierungen verschwunden sein, so wird keine Information bzgl. des Verschleißes der Bremsscheibe übermittelt. In diesem Fall wird nur der kontinuierliche Verschleiß des Bremsbelags angezeigt.

Um die erfindungsgemäße Technologie in möglichst vielen Fahrzeugen verwenden zu können, kann der Sensor bzw. das Sensorelement mit den vorhandenen Befestigungen der Fahrzeughersteller kompatibel sein und deren Signale emulieren. Wenn möglich kann der Sensor in diesem Fall auch seine Spannungsversorgung über das vom Kraftfahrzeughersteller vorgesehenes Anschlusskabel erhalten. Es können aber auch andere oder weitere Befestigungspunkte genutzt werden. Dazu würden auch Bremsbeläge, die momentan noch nicht für Anzeiger vorgesehen sind, mit den entsprechenden Befestigungsmöglichkeiten ausgestattet.

Da es sich erfindungsgemäß auch um ein nachrüstbares System handeln kann, kann die Übertragung der Information über Bluetooth oder ein anderes Format geschehen. Als Beispiele für solche Formate kann RFID, ZigBee, ANT, ANT+, das von mobilen Datengeräten anderen Sensoren oder Cloud-Rechner aufgegriffen und verarbeitet werden kann, genannt werden.

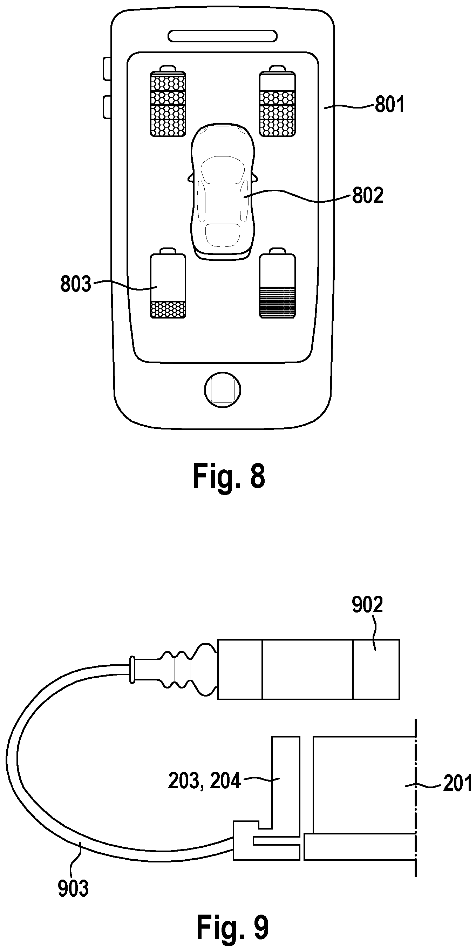

Diese können dann z.B. den Verschleiß des Bremsbelags und der Bremsscheibe, Temperatur, und andere gemessene/errechnete Daten bildlich und/oder numerisch darstellen und in nutzerdienliche Informationen wie den voraussichtlich besten Zeitpunkt für den nächsten Teilewechsel umwandeln. Dies ist beispielhaft in der Figur 8 gezeigt. Hier ist mit dem Bezugszeichen 801 ein mobiles Gerät, beispielsweise ein Smartphone markiert. Mittels einer Anwendungs-Software (APP) wird im Display ein Fahrzeug 802 sowie die Verschleißzustände 803 der Bremsbeläge und/oder der Bremsscheiben dargestellt

Die Kommunikation der Sensoren bzw. Sensorelemente der einzelnen Bremsen untereinander mit Signalauswertegeräten wie z.B. Android oder iOS kompatiblen Endgeräten sowie den im Fahrzeug verbauten Systemen soll über diverse drahtlose Übertragungswege (Bluetooth, Zigbee, ANT. ANT+) oder/und den im Fahrzeug vorhandenen Übertragungswegen z.B. Kabel realisiert werden.

Anhand der Figur 9 wird dies schematisch dargestellt. Hier ist das Sensorelement 203, mit der Halterung 204 sowie der Bremsbelag 201 zu sehen. Die Bremsscheibe ist hier nicht dargestellt.

Um den Micro-Kontroller 902 und die Übertragungselektronik 902 vor den extremen Bedingungen zu schützen, die an der Bremse vorkommen, werden diese Elemente 902 außerhalb des Bremssattels angebracht. Dazu wird der Sensor 203 wie bei den momentan existierenden Systemen mit Kabeln 903 angeschlossen. Auf dem Bremssattel kann die Einheit 902 aufgeklebt oder anderweitig befestigt werden. Sie kann aber auch über Stecker Adapter mit bereits existierenden Verkabelungen zur Verschleißanzeige verbunden werden und wäre damit frei hängend in einer Steckverbindung untergebracht.

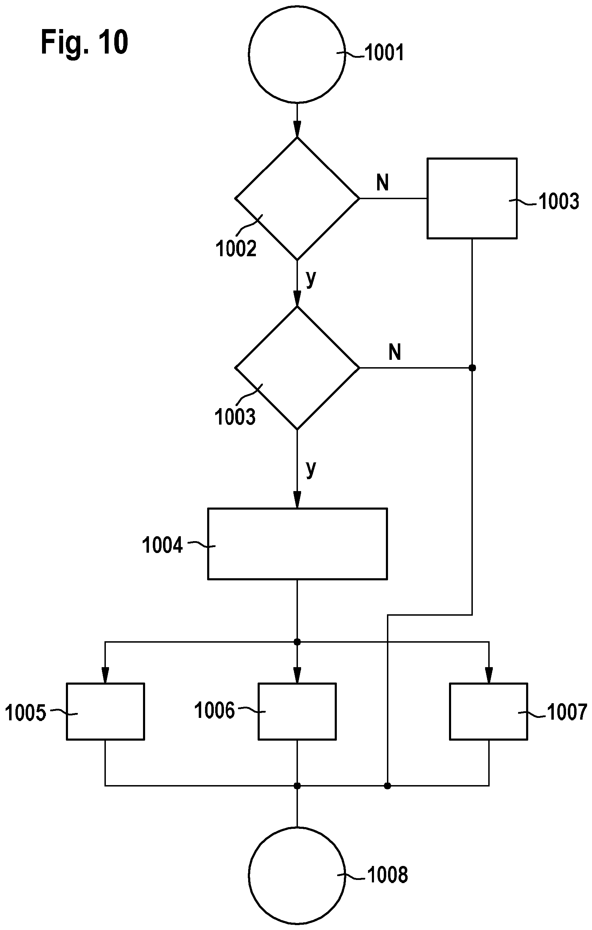

In der Figur 10 wird beispielhaft ein Verfahren beschrieben, das die Erfindung benutzt.

Nach dem Startschritt 1001 wird im Schritt 1002 ermittelt, ob momentan ein Bremsvorgang vorliegt. Ist dies nicht der Fall, so wird das Verfahren beendet. Da das Anliegen des Bremsbelags an der Bremsscheibe für die Ermittlung des Verschleiß des Bremsbelags nicht erforderlich ist, kann aber auch noch vor der Beendigung (Endschritt 1008) der Verschleiß des Bremsbelags im Schritt 1003 ermittelt werden.

Liegt ein Bremsvorgang vor, d.h. dass der Bremsbelag und damit das Sensorelement an der Bremsscheibe anliegt, so wird im Schritt 1003 ermittelt, ob die Fahrzeuggeschwindigkeit unterhalb eines Grenzwertes ist. Der Schritt 1003 kann auch weggelassen werden.

Im Schritt 1004 wird das durch das Sensorelement erfasste Muster erfasst und in den Schritten 1005 (Verschleiß der Bremsscheibe), 1006 (Drehrichtungserkennung) und ggf. die Fahrzeuggeschwindigkeit (nicht als Block dargestellt) ausgewertet. Daneben kann, wie im Block 1003) an dieser Stelle des Ablaufs auch der Verschleiß des Bremsbelags erfasst werden. Es können in diesem Schritt auch weitere Werte wie die Temperatur erfasst werden.

Nach dem Endschritt 1008 wird das Verfahren wieder mit dem Schritt 101 gestartet. Im Endschritt 1008 können auch die Daten zur Auswertung übermittelt werden.

Die vorliegenden Ausführungsformen können stichwortartig wie folgt zusammengefasst werden:
- Nachrüstbare Verschleißsensierung
- Kontinuierliche Verschleißsensierung des Bremsbelags
- Gleichzeitiges Sensieren der Abnutzung der Bremsscheibe und des Bremsbelages mit nur einer Sensor Einheit
- Aufbringen eines Codes/Musters auf der Bremsscheibe zur elektronischen, kontinu ierlichen Verschleißsensierung.
- Bei Verwendung einer codierten Scheibe die kontinuierliche Verschleißsensierung der Bremsscheibe.
- Drahtlose Kommunikation mit dem Fahrzeughalter/Werkstatt/Flottenbesitzer
- Mögliche Übergabe von Daten an weitere Systeme wie z.B. ESP/ABS Systeme
- Unterbringung des Micro-Controllers als Zwischenstecker im Kabelstrang falls vorhanden.
- Eigenkalibrierung des Sensors
- Drehrichtung- / Geschwindigkeitsmessung

## Patentansprüche

1. Sensoranordnung (200) zur kombinierten Erfassung eines Verschleißes von Komponenten (201, 202) einer Bremsanlage, insbesondere eines Kraftfahrzeugs, wobei die Bremsanlage wenigstens eine Bremsscheibe (202) und einen Bremsbelag (201) aufweist, wobei die Sensoranordnung (200) ein Muster (401) der Bremsscheibe (202) erfasst, **dadurch gekennzeichnet dass** die Sensoranordnung (200) derart ausgestaltet ist, dass die Sensoranordnung
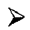 das Muster (303, 304, 401) der Bremsscheibe (202) dann erfasst, wenn wenigstens ein Teil (203) der Sensoranordnung (200) an wenigstens einem Teil der Bremsscheibe (202) anliegt, wobei
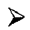 das Anliegen wenigstens eines Teils (203) der Sensoranordnung (200) an wenigstens einem Teil der Bremsscheibe (202) erfasst wird.

2. Sensoranordnung (200) nach Anspruch 1, **dadurch gekennzeichnet, dass** die Sensoranordnung (200) derart ausgestaltet ist, dass sie ein sich mit der Dicke (205) der Bremsscheibe (202) veränderndes Muster (303, 304, 401) der Bremsscheibe (202) erfasst.

3. Sensoranordnung (200) nach Anspruch 1, **dadurch gekennzeichnet, dass** als Muster in wenigstens einem Teil der Bremsscheibe (202) verteilte Rillen (303, 304, 401) und/oder Löcher und/oder Ovale unterschiedlicher Tiefe erfasst werden, wobei insbesondere vorgesehen ist, dass als Muster
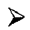 Rillen (303, 304, 401) mit einer tiefenabhängigen Breite und/oder
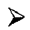 radial in der Bremsscheibe verlaufende Rillen (303, 304, 401) und/oder
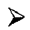 radial in der Bremsscheibe verlaufende Rillen (306, 303, 401) mit unterschiedlichen Abständen zueinander
erfasst werden.

4. Sensoranordnung (200) nach Anspruch 1, **dadurch gekennzeichnet, dass** als Muster in wenigstens einem Teil der Bremsscheibe verteiltes Material erfasst wird, wobei das Material von dem der Bremsscheibe (202) unterschiedlich ist, wobei insbesondere vorgesehen ist, dass die Verteilung des Materials als tiefenabhängige Verteilung erfasst werden.

5. Sensoranordnung (200) nach einem der vorangehenden Ansprüche, **dadurch gekennzeichnet, dass** wenigstens Teile (203, 204) der Sensoranordnung (200) derart ausgestaltet sind, dass diese Teile (203, 204) wenigstens eine von der Sensoranordnung erfassbare Eigenschaften aufweisen und wenigstens eine der erfassbaren Eigenschaften sich mit der Abnutzung des Bremsbelags (201) ändert.

6. Sensoranordnung (200) nach einem der vorangehenden Ansprüche, **dadurch gekennzeichnet, dass** die Sensoranordnung (200) aus einem einzigen Sensorelement (203, 204) besteht oder die Sensoranordnung (200) aus mehreren Sensorelementen (203, 204) besteht.

7. Sensoranordnung (200) nach Anspruch 5 und 6, **dadurch gekennzeichnet, dass** das Sensorelement (200) am und/oder im Bremsbelag (201) und/oder am Bremssattel und/oder an der Bremsenaufhängung befestigt oder integriert ist und wenigstens Teile (203, 204) des Sensorelements während des Bremsbetriebs mit dem Bremsbelag (201) verschlissen werden und damit die erfassbaren Eigenschaften geändert werden, wobei insbesondere vorgesehen ist, dass die Eigenschaft durch eine Messung des elektrischen Widerstands und/oder der elektrischen Kapazität erfasst werden.

8. Sensoranordnung (200) nach Anspruch 7, **dadurch gekennzeichnet, dass** die sich mit dem Bremsbelag verschleißenden Teile (203, 204) des Sensorelements wenigstens eine der sich durch das Muster (303, 304, 401) der Bremsscheibe verändernde Eigenschaften erfassen.

9. Sensoranordnung (200) nach wenigstens einem der vorhergehende Ansprüche, **dadurch gekennzeichnet, dass** die Sensoranordnung (200) eine drahtlose Übertragungseinheit (902) aufweist, mittels der die erfassten Größen drahtlos übertragen werden, wobei insbesondere vorgesehen ist, dass die Übertragungseinheit (902) räumlich getrennt von dem Sensorelement (200) angeordnet ist.

10. Bremsbelag (201) mit einer Sensoranordnung nach einem der vorangehenden Ansprüche.

11. Verfahren zur kombinierten Erfassung eines Verschleißes einer Bremsscheibe (203) und eines Bremsbelags (201) einer Bremsanlage mit einer Sensoranordnung (200) nach einem der Ansprüche 1 bis 10, **dadurch gekennzeichnet, dass** zusätzlich die Drehrichtung der Bremsscheibe (203) erfasst wird.

12. Verfahren zur kombinierten Erfassung eines Verschleißes einer Bremsscheibe (203) und eines Bremsbelags (201) einer Bremsanlage mit einer Sensoranordnung (200) nach einem der Ansprüche 1 bis 9, **dadurch gekennzeichnet, dass** zumindest die Erfassung des Verschleißes der Bremsscheibe (203) nur während Bremsvorgängen getätigt wird.

13. Verfahren nach Anspruch 11 oder 12, **dadurch gekennzeichnet, dass** die Erfassung des Verschleißes der Bremsscheibe (203) nur während vorbestimmter Bremsvorgängen getätigt wird, wobei die Bremsvorgänge abhängig von der Geschwindigkeit des Kraftfahrzeugs und/oder abhängig vom Ausmaß des Bremsvorgangs vorbestimmt werden.

14. Verfahren nach einem der Ansprüche 11 bis 13, **dadurch gekennzeichnet, dass** eine die Temperatur des Bremsbelags (201) repräsentierende Temperaturgröße erfasst wird und die Temperaturgröße bei der Erfassung des Verschleißes berücksichtigt wird.

## Claims

1. Sensor assembly (200) for the combined detection of wear of components (201, 202) of a brake system, in particular of a motor vehicle, wherein the brake system has at least one brake disc (202) and one brake pad (201), wherein the sensor assembly (200) detects a pattern (401) of the brake disc (202, **characterized in that** the sensor assembly (200) is designed in such a manner that the sensor assembly - detects the pattern (303, 304, 401) of the brake disc (202) when at least one part (203) of the sensor assembly (200) bears on at least one part of the brake disc (202), wherein
- the bearing action of at least one part (203) of the sensor assembly (200) on at least one part of the brake disc (202) is detected.

2. Sensor assembly (200) according to Claim 1, **characterized in that** the sensor assembly (200) is designed in such a manner that said sensor assembly (200) detects a pattern (303, 304, 401) of the brake disc (202) that varies conjointly with the thickness (205) of the brake disc (202) .

3. Sensor assembly (200) according to Claim 1, **characterized in that** grooves (303, 304, 401) and/or holes and/or ovals of dissimilar depths that are distributed in at least one part of the brake disc (202) are detected as the pattern, wherein it is in particular provided that
- grooves (303, 304, 401) having a depth-dependent width, and/or
- grooves (303, 304, 401) that are radially distributed in the brake disc, and/or
- grooves (306, 303, 401) that run radially in the brake disc and are dissimilarly spaced apart from one another
are detected as the pattern.

4. Sensor assembly (200) according to Claim 1, **characterized in that** material that is distributed in at least one part of the brake disc is detected as the pattern, wherein the material is different from that of the brake disc (202), wherein it is in particular provided that the distribution of the material is detected as the depth-dependent distribution.

5. Sensor assembly (200) according to one of the preceding claims, **characterized in that** at least parts (203, 204) of the sensor assembly (200) are designed in such a manner that these parts (203, 204) have at least one of the properties that are detectable by the sensor assembly, and at least one of the detectable properties varies conjointly with the wear of the brake disc (201).

6. Sensor assembly (200) according to one of the preceding claims, **characterized in that** the sensor assembly (200) is composed of a single sensor element (203, 204), or the sensor assembly (200) is composed of a plurality of sensor elements (203, 204).

7. Sensor assembly (200) according to Claims 5 and 6, **characterized in that** the sensor element (200) is fastened to and/or integrated in the brake pad (201) and/or to the brake calliper and/or to the brake suspension, and at least parts (203, 204) of the sensor element during the operation of the brake are worn conjointly with the brake pad (201) and the detectable properties are thus varied, wherein it is in particular provided that the properties are detected by measuring the electrical resistance and/or the electrical capacity.

8. Sensor assembly (200) according to Claim 7, **characterized in that** the parts (203, 204) of the sensor element that wear conjointly with the brake pad detect at least one of the properties that vary on account of the pattern (303, 304, 401) of the brake disc.

9. Sensor assembly (200) according to at least one of the preceding claims, **characterized in that** the sensor assembly (200) has a wireless transmission unit (902) by means of which the detected variables are wirelessly transmitted, wherein it is in particular provided that the transmission unit (902) in spatial terms is disposed separately from the sensor element (200).

10. Brake pad (201) having a sensor assembly according to one of the preceding claims.

11. Method for the combined detection of wear of a brake disc (203) and a brake pad (201) of a brake system having a sensor assembly (200) according to one of Claims 1 to 10, **characterized in that** the direction of rotation of the brake disc (203) is additionally detected.

12. Method for the combined detection of wear of a brake disc (203) and a brake pad (201) of a brake system having a sensor assembly (200) according to one of Claims 1 to 9, **characterized in that** at least the detection of the wear of the brake disc (203) is performed only during braking procedures.

13. Method according to Claim 11 or 12, **characterized in that** the detection of the wear of the brake disc (203) is performed only during predetermined brake procedures, wherein the brake procedures are predetermined as a function of the speed of the motor vehicle and/or as a function of the extent of the braking procedure.

14. Method according to one of Claims 11 to 13, **characterized in that** a temperature variable that represents the temperature of the brake pad (201) is detected, and the temperature variable is taken into account when detecting the wear.

## Revendications

1. Ensemble de capteurs (200) pour la détection combinée de l'usure de composants (201, 202) d'un système de freinage, en particulier d'un véhicule automobile, le système de freinage présentant au moins un disque de frein (202) et une garniture de frein (201), l'ensemble de capteurs (200) détectant un motif (401) du disque de frein (202),
**caractérisé en ce que** l'ensemble de capteurs (200) est configuré de telle sorte que l'ensemble de capteurs
- détecte le motif (303, 304, 401) du disque de frein (202) si au moins une partie (203) de l'ensemble de capteurs (200) est appliquée à au moins une partie du disque de frein (202), dans lequel
- l'application d'au moins une partie (203) de l'ensemble de capteurs (200) à au moins une partie du disque de frein (202) est détectée.

2. Ensemble de capteurs (200) selon la revendication 1, **caractérisé en ce que** l'ensemble de capteurs (200) est configuré de telle sorte qu'il détecte un motif (303, 304, 401) du disque de frein (202) qui varie selon l'épaisseur (205) du disque de frein (202).

3. Ensemble de capteurs (200) selon la revendication 1, **caractérisé en ce que** des stries (303, 304, 401) réparties dans au moins une partie du disque de frein (202) et/ou des trous et/ou des ovales de différentes profondeurs sont détectés en tant que motif, dans lequel il est prévu en particulier qu'on détecte en tant que motif
- des stries (303, 304, 401) d'une largeur dépendant de la profondeur, et/ou
- des stries (303, 304, 401) s'étendant radialement dans le disque de frein, et/ou
- des stries (306, 303, 401) s'étendant radialement dans le disque de frein et qui se trouvent à des distances différentes les unes des autres.

4. Ensemble de capteurs (200) selon la revendication 1, **caractérisé en ce qu'**un matériau réparti dans au moins une partie du disque de frein est détecté en tant que motif, le matériau étant différent de celui du disque de frein (202), dans lequel il est prévu en particulier que la répartition du matériau soit détectée comme une répartition dépendant de la profondeur.

5. Ensemble de capteurs (200) selon l'une quelconque des revendications précédentes, **caractérisé en ce qu'**au moins des parties (203, 204) de l'ensemble de capteurs (200) sont configurées de telle sorte que ces parties (203, 204) présentent au moins l'une des propriétés pouvant être détectées par l'ensemble de capteurs, et au moins l'une des propriétés pouvant être détectées varie selon l'usure de la garniture de frein (201).

6. Ensemble de capteurs (200) selon l'une quelconque des revendications précédentes, **caractérisé en ce que** l'ensemble de capteurs (200) est composé d'un seul élément capteur (203, 204) ou l'ensemble de capteurs (200) est composé de plusieurs éléments capteurs (203, 204) .

7. Ensemble de capteurs (200) selon les revendications 5 et 6, **caractérisé en ce que** l'élément capteur (200) est fixé ou intégré sur et/ou dans la garniture de frein (201) et/ou sur l'étrier de frein et/ou sur la suspension de frein, et au moins des parties (203, 204) de l'élément capteur s'usent pendant le fonctionnement de frein avec la garniture de frein (201) et ainsi les propriétés pouvant être détectées varient de manière correspondante, dans lequel il est prévu en particulier que la propriété soit détectée par une mesure de la résistance électrique et/ou de la capacité électrique.

8. Ensemble de capteurs (200) selon la revendication 7, **caractérisé en ce que** les parties (203, 204) de l'élément capteur qui s'usent avec la garniture de frein détectent au moins l'une des propriétés qui varient par le motif (303, 304, 401) du disque de frein.

9. Ensemble de capteurs (200) selon au moins l'une quelconque des revendications précédentes, **caractérisé en ce que** l'ensemble de capteurs (200) présente une unité de transmission sans fil (902) au moyen de laquelle les grandeurs détectées sont transmises sans fil, dans lequel il est prévu en particulier que l'unité de transmission (902) soit disposée de manière physiquement séparée de l'élément capteur (200).

10. Garniture de frein (201) dotée d'un ensemble de capteurs selon l'une quelconque des revendications précédentes.

11. Procédé de détection combinée de l'usure d'un disque de frein (203) et d'une garniture de frein (201) d'un système de freinage doté d'un ensemble de capteurs (200) selon l'une quelconque des revendications 1 à 10, **caractérisé en ce qu'**en outre le sens de rotation du dispositif de frein (203) est détecté.

12. Procédé de détection combinée de l'usure d'un disque de frein (203) et d'une garniture de frein (201) d'un système de freinage doté d'un ensemble de capteurs (200) selon l'une quelconque des revendications 1 à 9, **caractérisé en ce qu'**au moins la détection de l'usure du disque de frein (203) n'est actionnée que pendant des opérations de freinage.

13. Procédé selon la revendication 11 ou 12, **caractérisé en ce que** la détection de l'usure du disque de frein (203) n'est actionnée que pendant des opérations de freinage prédéterminées, les opérations de freinage étant prédéterminées en fonction de la vitesse du véhicule automobile et/ou en fonction de l'ampleur de l'opération de freinage.

14. Procédé selon l'une quelconque des revendications 11 à 13, **caractérisé en ce qu'**une grandeur de température représentant la température de la garniture de frein (201) est détectée, et la grandeur de température est prise en compte lors de la détection de l'usure.
